# EUROPEAN PATENT APPLICATION

(11) **EP 4 209 895 A1**
(43) Date of publication of application: **12.07.2023**
(21) Application number: 21874217.9
(22) Date of filing: 11.09.2021
(51) Int. Cl.: G06F 8/51

(54) **CODE TRANSLATION METHOD AND APPARATUS, AND DEVICE**

(30) Priority: 30.09.2020 CN 202011066285
(71) Applicant: Huawei Technologies Co., Ltd., Shenzhen, Guangdong 518129 (CN)
(72) Inventor: WU, Weinan, Shenzhen, Guangdong 518129 (CN); LYU, Zhihong, Shenzhen, Guangdong 518129 (CN); LE, Yongnian, Shenzhen, Guangdong 518129 (CN); XU, Shanshan, Shenzhen, Guangdong 518129 (CN)
(74) Representative: Maiwald GmbH
(86) International application number: PCT/CN2021/117850
(87) International publication number: WO 2022/068556

(57) **Abstract**

Provided is a code translation method. The method includes: obtaining first code, where the first code is written based on a platform-dependent language of a source platform, then determining at least one translation rule that matches the first code, where the translation rule is used to directly translate code of one platform into code of another platform, and then translating the first code by using the translation rule, to obtain second code applicable to a target platform. This method implements automatic cross-platform translation of code by using the translation rule, and improves translation efficiency and translation accuracy.

## Description

This application claims priority to Chinese Patent Application No. 202011066285.0, filed with the China International Property Administration on September 30, 2020, and entitled "CODE TRANSLATION METHOD AND APPARATUS, AND DEVICE", which is incorporated herein by reference in its entirety.

### TECHNICAL FIELD

This application relates to the field of application development technologies, and in particular, to a code translation method and apparatus, a device, and a computer-readable storage medium.

### BACKGROUND

An application is an executable computer program that is written based on a computer language and runs on a hardware platform. The hardware platform refers to a platform that performs data processing based on an instruction set. If hardware platforms use different instruction sets, the hardware platforms are different. For example, if two hardware platforms use different complex instruction sets in an x86 architecture, the two hardware platforms are different. For another example, if two hardware platforms use instruction sets in different architectures, for example, a complex instruction set in an x86 architecture and a reduced instruction set in an advanced reduced instruction set computer machines (advanced RISC machines, ARM) architecture, the two hardware platforms are different.

A developer may develop an application on a hardware platform based on a platform-dependent language (specifically, a computer language closely related to the hardware platform). An increasing quantity of hardware platforms causes gradually increasing requirements for cross-platform code migration. For example, with the rise of an ARM chip in the mobile communication field and the general-purpose computing field, a requirement for translating code of an application from an x86 platform to an ARM platform or a requirement for migrating code of an application from a version (for example, ARM V8) of an ARM platform to another version (for example, ARM V9) of the ARM platform continuously increases.

Currently, cross-platform translation of applications written based on platform-dependent languages is mainly performed manually. However, this translation method has low efficiency and a high requirement for a translator, further increases translation costs, and hardly meets a service requirement.

### SUMMARY

This application provides a code compilation method. In the method, automatic cross-platform translation of code is implemented by using a pre-created translation rule. This resolves problems of low manual migration efficiency, a long migration period, a high migration threshold, and being prone to errors, reduces code migration costs, and can meet a service requirement. This application further provides an apparatus, a device, a computer-readable storage medium, and a computer program product corresponding to the foregoing method.

According to a first aspect, this application provides a code translation method. The method may be performed by a code translation apparatus. The code translation apparatus is an apparatus having a cross-platform translation function. The apparatus may be a software module, and provides a code translation service by running on a hardware device such as a computer. In some possible implementations, the code translation apparatus may alternatively be a hardware module having a code translation function.

Specifically, the code translation apparatus may obtain first code, where the first code is written based on a platform-dependent language of a source platform. Then, the code translation apparatus determines at least one translation rule that matches the first code, where the translation rule is used to directly translate code of one platform into code of another platform. Then, the code translation apparatus translates the first code by using the translation rule, to obtain second code applicable to a target platform.

In the method, automatic cross-platform translation of code is implemented by using a pre-created rule in a rule base. This resolves problems of low manual migration efficiency, a long migration period, a high migration threshold, and being prone to errors, reduces code migration costs, and can meet a service requirement. In addition, the method can directly translate the first code applicable to the source platform to the second code applicable to the target platform without using another intermediate model or object. This improves translation efficiency and translation accuracy.

In some possible implementations, the code translation apparatus may be provided for a user in a form of a software package. Specifically, an owner of the code translation apparatus may release the software package of the code translation apparatus. The user may obtain the software package by using a computing apparatus, and then the computing apparatus runs the software package, so that automatic cross-platform translation is performed on the first code applicable to the source platform.

In some possible implementations, the code translation apparatus may be provided for the user in a form of a cloud service. The user may upload the first code applicable to the source platform to the cloud. The code translation apparatus in the cloud may perform automatic cross-platform translation on the first code to obtain the second code applicable to the target platform, and then return the second code applicable to the target platform to the user. A translation process is mainly performed in the cloud, and a local computing apparatus mainly assists in translation. Therefore, a requirement on performance of the local computing apparatus is low, and high availability is implemented.

In some possible implementations, the code translation apparatus may directly receive the translation rule imported by the user, to determine the at least one translation rule that matches the first code. Specifically, before the at least one translation rule that matches the first code is determined, the code translation apparatus may first receive a translation rule that is input by the user in a user interface, for example, a graphical user interface (graphical user interface, GUI). In some embodiments, the user may also modify an existing translation rule in the GUI. Correspondingly, the code translation apparatus may further receive the translation rule that is modified by the user in the GUI.

Based on this, the code translation apparatus may transplant the existing translation rule to implement automatic cross-platform code translation. This improves code translation efficiency.

In some possible implementations, the code translation apparatus may also generate a translation rule, to perform code translation based on the translation rule. Specifically, an instruction of the source platform does not correspond to an instruction on the target platform. For example, a read time stamp counter (rdtsc) instruction on an x86 platform does not correspond to an instruction on an advanced reduced instruction set machines (advanced RISC machines, ARM) platform. The code translation apparatus may generate, in a manual intervention manner, a translation rule corresponding to the instruction, for example, a translation rule corresponding to an instruction unique to the source platform.

Specifically, before the at least one translation rule that matches the first code is determined, the code translation apparatus may receive auxiliary information input by the user, where the auxiliary information may be a function having same semantic meaning as an instruction. For example, when the read time stamp counter (rdtsc) instruction on the x86 platform has no corresponding instruction on the ARM platform, the user may implement same semantic meaning by using a function of a high-level language, for example, manually writing a function rdtscOnArm(). Then, the code translation apparatus generates the corresponding translation rule based on the auxiliary information (for example, the function having same semantic meaning).

It should be noted that a translation rule generation process may be implemented by the code translation apparatus, or may be implemented by an independent rule generation apparatus. This is not limited in this embodiment of this application.

In some possible implementations, when the instruction of the source platform corresponds to an instruction on the target platform, the corresponding translation rule may alternatively be automatically generated based on a mapping relationship between a platform-dependent language of the source platform and a target language. This can improve translation rule generation efficiency, and improve translation efficiency.

Specifically, before the at least one translation rule that matches the first code is determined, the code translation apparatus obtains historical code applicable to the source platform, where the historical code is written based on the platform-dependent language of the source platform. Then, the code translation apparatus generates the translation rule based on a feature that affects semantic meaning and that is in the historical code and based on the mapping relationship between the platform-dependent language of the source platform and the target language.

The feature that affects semantic meaning is a feature that has impact on semantic meaning. During specific implementation, the code translation apparatus may identify, based on a syntax rule of the platform-dependent language, the feature that affects semantic meaning. For any one of the foregoing features, if the feature appears in a conditional statement of the syntax rule, the code translation apparatus may determine that the feature is the feature that affects semantic meaning. For example, if the syntax rule includes if xx..., then..., the code translation apparatus may determine that the feature xx is the feature that affects semantic meaning.

Rule templates corresponding to different rule indexes may be constructed based on the mapping relationship between the platform-dependent language of the source platform and the target language, for example, rule templates corresponding to an or instruction and an exclusive or instruction. The rule template includes a placeholder. The placeholder specifically corresponds to a location at which a difference is generated on different platforms. For example, if expressions of operands are different on different platforms, the placeholder may be used in the rule template to replace the expressions of operands.

The code translation apparatus may identify, based on the feature that affects semantic meaning, a rule index of a translation rule that can be generated, then determine a corresponding rule template based on the rule index, and generate a corresponding translation rule based on the rule template. Specifically, the code translation apparatus may replace the instruction in the rule template with an instruction that corresponds to the instruction in the instruction statement and that is on the target platform, to obtain the translation rule.

Similarly, the foregoing rule generation method may be implemented by the code translation apparatus, or may be implemented by an independent rule generation apparatus. This is not limited in this embodiment of this application.

In some possible implementations, the translation rule may be stored in a rule base in a form of a table. The table (also referred to as a rule table) for storing translation rules may include a rule index and rule content. The rule index may be an identifier of the rule, for example, a rule name or a rule number. The rule name is easy for the user to remember. The rule content is used to generate the code of the target platform. Specifically, the rule content may include an instruction template of the corresponding instruction on the target platform. The instruction template includes a placeholder. The placeholder is used to occupy an instruction difference, so that modification is performed based on the placeholder during code translation.

Based on the foregoing rule index, a translation rule corresponding to a code fragment can be quickly obtained through matching. This can improve code translation efficiency.

In some possible implementations, the code translation apparatus may extract a feature from the first code, and then identify, from the feature, the feature that affects semantic meaning. For example, the feature that affects semantic meaning is identified from the feature based on the syntax rule, and then the at least one translation rule is determined from the rule base based on the feature that affects semantic meaning. This can implement automatic cross-platform translation of code by using the translation rule, and improve code translation efficiency.

In some possible implementations, the code translation apparatus may extract a structure feature or a variable attribute feature of at least one statement from the first code. The structure feature includes any one or more of a prefix (prefix), a suffix (suffix), a constraint, and a modifier. The variable attribute feature may include a variable type and a variable quantity. For example, when the variable is an operand of an instruction, the variable attribute feature may be an operand type and an operand quantity. The operand type may specifically include types such as an immediate operand (immediate, I), a register operand (register, R), and a memory operand (memory, M).

The structure feature or the variable attribute feature of the statement is extracted from the code fragment, so that the corresponding translation rule can be quickly determined based on the structure feature. This can improve code translation efficiency.

In some possible implementations, the code translation apparatus may fill the placeholder in the translation rule based on the feature extracted from the first code, to obtain the second code applicable to the target platform. This implements automatic cross-platform translation of code by using the translation rule, and improves code translation efficiency.

In some possible implementations, the second code includes a code fragment based on the platform-dependent language of the target platform or a code fragment of a high-level program language. For example, the second code may be a code fragment of an assembly language based on an ARM platform, or a code fragment of a Java language.

In some possible implementations, the code translation apparatus may display code in a code file to the user in a user interface such as a graphical user interface (graphical user interface, GUI). The user may select the code in the GUI. The code translation apparatus may receive the code that is selected by the user in the GUI, to obtain the first code.

This method supports code translation of user-selected code, for example, the entire code file or a fragment in the code file. This meets an individual requirement, and improves user experience.

In some possible implementations, the user interface such as the GUI provided by the code translation apparatus may further carry a platform selection control. The user may select a platform as the target platform by using the platform selection control. The code translation apparatus may receive the target platform selected by the user, and start an operation of translating code of the source platform to the target platform.

Based on this, the code translation apparatus may provide a service of translating the code of the source platform to different platforms. This can meet an individual translation requirement of the user, and improves user experience.

In some possible implementations, the code translation apparatus may obtain the source platform corresponding to the first code, identify a platform running the code translation apparatus, and determine the platform running the code translation apparatus as the target platform. Translation from the code of the source platform to the target platform can be triggered without manual selection by the user. This simplifies a user operation, and improves user experience.

In some possible implementations, the code translation apparatus may further prompt a difference between the source platform and the target platform. Specifically, the code translation apparatus may prompt the difference between the source platform and the target platform in the GUI.

In some embodiments, when displaying the second code, the code translation apparatus may highlight a difference between the second code applicable to the target platform and the first code applicable to the source platform, to prompt the difference between the source platform and the target platform.

In some other embodiments, when displaying the second code, the code translation apparatus may alternatively prompt the difference between the source platform and the target platform in a form of a prompt box. The prompt box may include the difference between the source platform and the target platform, for example, may include a function call convention difference and an instruction difference.

The difference between the source platform and the target platform is prompted, so that the user can optimize the code. This can improve development efficiency.

According to a second aspect, this application provides a code translation apparatus. The apparatus specifically includes:
a communication module, configured to obtain first code, where the first code is written based on a platform-dependent language of a source platform;
a determining module, configured to determine at least one translation rule that matches the first code, where the translation rule is used to directly translate code of one platform into code of another platform; and
a translation module, configured to translate the first code by using the translation rule, to obtain second code applicable to a target platform.

In some possible implementations, the communication module is further configured to:
before the at least one translation rule that matches the first code is determined, receive a translation rule that is input or modified by a user in a graphical user interface.

In some possible implementations, the communication module is further configured to:
before the at least one translation rule that matches the first code is determined, receive auxiliary information input by the user.

The apparatus further includes:
a generation module, configured to generate, based on the auxiliary information, a translation rule corresponding to an instruction unique to the source platform.

In some possible implementations, the communication module is further configured to:
before the at least one translation rule that matches the first code is determined, obtain historical code applicable to the source platform, where the historical code is written based on the platform-dependent language of the source platform.

The apparatus further includes:
generating the translation rule based on a feature that affects semantic meaning and that is in the historical code and based on a mapping relationship between the platform-dependent language of the source platform and a target language.

In some possible implementations, the translation rule is stored in a rule base in a form of a table.

In some possible implementations, the determining module is specifically configured to:
extract a feature from the first code;
identify, from the feature, the feature that affects semantic meaning; and
determine the at least one translation rule from the rule base based on the feature that affects semantic meaning.

In some possible implementations, the apparatus further includes:
a display module, configured to display code in a code file to the user in the graphical user interface.

The communication module is specifically configured to:
receive the first code that is selected by the user in the graphical user interface.

In some possible implementations, the apparatus further includes:
a prompting module, configured to prompt a difference between the source platform and the target platform.

According to a third aspect, this application provides a device. The device includes a processor and a memory. The processor and the memory communicate with each other. The processor is configured to execute instructions stored in the memory, so that the device performs the code translation method according to any one of the first aspect or the implementations of the first aspect.

According to a fourth aspect, this application provides a computer-readable storage medium. The computer-readable storage medium stores instructions. The instructions indicate a device to perform the code translation method according to any one of the first aspect or the implementations of the first aspect.

According to a fifth aspect, this application provides a computer program product including instructions. When the computer program product runs on a device, the device is enabled to perform the code translation method according to any one of the first aspect or the implementations of the first aspect.

In this application, based on implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings used in describing the embodiments.
FIG. 1 is an architecture diagram of a system of a code compilation method according to an embodiment of this application;
FIG. 2 is an architecture diagram of a system of a code compilation method according to an embodiment of this application;
FIG. 3 is a flowchart of a code compilation method according to an embodiment of this application;
FIG. 4 is a schematic diagram of displaying code in a GUI according to an embodiment of this application;
FIG. 5 is a schematic diagram of a rule table according to an embodiment of this application;
FIG. 6 is a flowchart of determining a translation rule that matches first code according to an embodiment of this application;
FIG. 7 is a flowchart of a translation rule generation method according to an embodiment of this application;
FIG. 8 is a schematic flowchart of a code compilation method according to an embodiment of this application;
FIG. 9 is a schematic flowchart of a translation rule generation method according to an embodiment of this application;
FIG. 10 is a schematic diagram of a structure of a code compilation apparatus according to an embodiment of this application; and
FIG. 11 is a schematic diagram of a structure of a computing device according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

Some technical terms used in embodiments of this application are first described.

A programming language (programming language) is a formal language for defining a computer program. Therefore, the programming language is also referred to as a computer language. Specifically, a developer writes a code file based on the foregoing programming language, to develop an application.

The programming language may be classified into a platform-dependent language and a platform-independent language based on whether the language depends on a platform. The platform-dependent language is a language that depends on the platform. Code written based on a platform-dependent language is usually difficult to use directly on another platform. The platform-independent language is a language that is independent of a platform. Code written based on a platform-independent language can usually be directly used on another platform. Generally, the platform-dependent language includes a low-level program language, such as an assembly language or a machine language. The platform-independent language includes a high-level program language, such as Java or Python.

A platform is a computing architecture that processes data based on an instruction set. When instruction sets are different, platforms are different. It should be noted that different platforms may be different platforms of a same type. For example, Pentium II and Pentium III (to which a new SSE instruction set is introduced) on an x86 platform (a general-purpose computing platform leadingly developed by Intel Corporation) are different platforms of an x86 type. For another example, ARM V8 and ARM V9 on an ARM platform (a computing platform leadingly developed by ARM Holdings) are different platforms of an ARM type. Certainly, different platforms may alternatively be platforms of different types. For example, Pentium II on an x86 platform and ARM V8 on an ARM platform are obviously different platforms.

An increasing quantity of platforms causes gradually increasing requirements for cross-platform code migration. For example, with the rise of an ARM platform in the mobile communication field and the general-purpose computing field, a requirement for translating code of an application from an x86 platform to an ARM platform or a requirement for translating code of an application from a version (for example, ARM V8) of an ARM platform to another version (for example, ARM V9) of the ARM platform continuously increases.

Currently, cross-platform translation of applications written based on platform-dependent languages is mainly performed manually. However, this translation method has low efficiency and a high requirement for a translator, further increases translation costs, and hardly meets a service requirement.

In view of this, an embodiment of this application provides a code translation method. The method may be performed by a code translation apparatus. The code translation apparatus may be a software module, and provides a code translation service by running on a hardware device such as a computer. In some possible implementations, the code translation apparatus may alternatively be a hardware module having a code translation function. This is not limited in this embodiment of this application.

Specifically, the code translation apparatus obtains first code, where the first code is code written based on a platform-dependent language of a source platform, for example, code written based on an assembly language of an x86 platform. Then, the code translation apparatus determines at least one translation rule that matches the first code, where the translation rule is used to directly translate code of one platform into code of another platform. In this case, the code translation apparatus may translate the first code by using the translation rule, to obtain second code applicable to a target platform, for example, code based on an assembly language of an ARM platform.

In the method, automatic cross-platform translation of code is implemented by using a pre-created rule in a rule base. This resolves problems of low manual migration efficiency, a long migration period, a high migration threshold, and being prone to errors, reduces code migration costs, and can meet a service requirement. In addition, the method can directly translate the first code applicable to the source platform to the second code applicable to the target platform without using another intermediate model or object. This improves translation efficiency and translation accuracy.

It should be noted that the code translation apparatus provided in this embodiment of this application may be provided for a user in a form of a software package. Specifically, an owner of the code translation apparatus may release the software package of the code translation apparatus. The user obtains the software package, and then the software package is run, so that automatic cross-platform translation is performed on the first code applicable to the source platform.

In some possible implementations, the code translation apparatus provided in this embodiment of this application may be provided for the user in a form of a cloud service. The user may upload the first code applicable to the source platform to the cloud. The code translation apparatus in the cloud may perform automatic cross-platform translation on the first code to obtain the second code applicable to the target platform, and then return the second code applicable to the target platform to the user.

To make the technical solutions of this application clearer and easier to understand, the following describes a deployment manner of the code translation apparatus in detail with reference to the accompanying drawings.

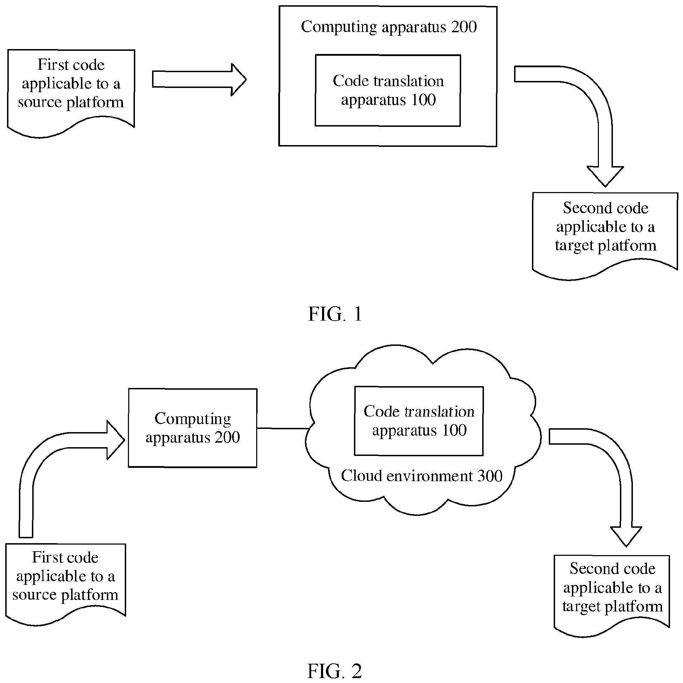

FIG. 1 is an architecture diagram of a system of a code translation method. The code translation method may be applied to a system shown in FIG. 1. The system includes a computing apparatus 200. The code translation apparatus 100 is deployed on the computing apparatus 200. The computing apparatus 200 includes but is not limited to a device such as a desktop computer or a notebook computer. The code translation apparatus 100 may be independent, or may be integrated with another development tool, for example, an editor, a compiler, or a debugger, to form an integrated development environment (integrated development environment, IDE).

Specifically, the user may submit, to the code translation apparatus 100 running on the computing apparatus 200, the first code applicable to the source platform. The code translation apparatus 100 determines the at least one translation rule that matches the first code, and then translates the first code by using the translation rule, to obtain the second code applicable to the target platform. In this way, cross-platform translation is performed on the first code locally (for example, on the local computing apparatus 200).

Then, FIG. 2 is an architecture diagram of a system of a code translation method. The code translation method may be applied to a system shown in FIG. 2. The system includes a computing apparatus 200 and a cloud environment 300. The code translation apparatus 100 is deployed in the cloud environment 300. The user accesses the code translation apparatus 100 in the cloud environment 300 by using the computing apparatus 200, to implement remote cross-platform translation of the first code.

The cloud environment 300 indicates a cloud computing cluster that is owned by a cloud service provider and that is used to provide computing, storage, and communication resources. The cloud computing cluster may be classified into a central cloud and an edge cloud based on a location in a network topology. The cloud computing cluster includes at least one cloud computing device, for example, at least one central server, or at least one edge server.

For example, the user may access the code translation apparatus 100 in the cloud environment 300 by using a browser on the computing apparatus 200 or a client dedicated to code translation. The code translation apparatus 100 may provide an interface, for example, a graphical user interface (graphical user interface, GUI) or a command user interface (command user interface, CUI). The user may input the first code in an interface such as the GUI or the CUI. The code translation apparatus 100 determines the at least one translation rule that matches the first code, and then translates the first code by using the translation rule, to obtain the second code applicable to the target platform. A translation process is mainly performed in the cloud environment 300, and the computing apparatus 200 mainly assists in translation. Therefore, a requirement on performance of the apparatus 200 is low, and high availability is implemented.

FIG. 1 and FIG. 2 merely describe some deployment manners of the code translation apparatus 100. In another possible implementation of this embodiment of this application, the code translation apparatus 100 may alternatively be deployed in another manner. This is not limited in this embodiment of this application.

With reference to the accompanying drawings, the following describes in detail the code translation method provided in this embodiment of this application from a perspective of the code translation apparatus 100.

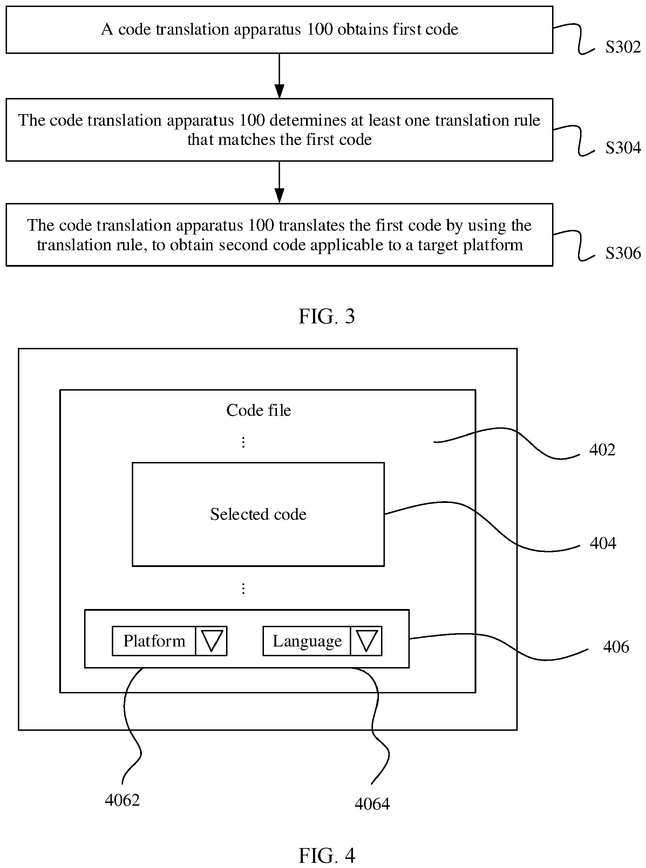

FIG. 3 is a flowchart of the code translation method. The method includes the following steps.

S302: The code translation apparatus 100 obtains the first code.

The first code is specifically code written based on the platform-dependent language of the source platform. The source platform may be any one of platforms such as an x86 platform and an ARM platform. The platform-dependent language of the source platform is a language that depends on the platform. For example, for the x86 platform, the platform-dependent language may be an assembly language on the x86 platform, especially an embedded assembly language. In some embodiments, the platform-dependent language may alternatively be a machine language on the x86 platform.

In some possible implementations, the code translation apparatus 100 may display code in a code file to the user in the user interface, such as the GUI or the CUI. Then, the code translation apparatus 100 may receive a code fragment selected by the user, to obtain the first code.

For ease of understanding, the following provides description with reference to a specific example. FIG. 4 is a schematic diagram of displaying code in the GUI by the code translation apparatus 100. As shown in FIG. 4, the code translation apparatus 100 displays code 402 in the code file to the user in the GUI. The user may select first code 404 in the code 402 in the GUI, and trigger a cross-platform translation operation by using a translation assembly 406 carried in the GUI.

The translation assembly 406 includes a platform selection control 4062 and a language selection control 4064. The user may select a platform as the target platform by using the platform selection control 4062. For example, if the source platform is an x86 platform, the user may select an ARM platform or a PowerPC platform as the target platform. In addition, the user may select a language as a target language by using the language selection control 4064. In some embodiments, the user may select an assembly language or a machine language as the target language. In some other embodiments, the user may alternatively select a C language, a Java language, a Python language, or the like as the target language by using the language selection control 4064. In other words, the target language may be a low-level program language on the target platform, or may be a high-level program language that can be applied to different platforms.

In some possible implementations, the code translation apparatus 200 may alternatively obtain the source platform corresponding to the first code, then identify a platform running the code translation apparatus 200, and determine the platform running the code translation apparatus 200 as the target platform.

Correspondingly, the code translation apparatus 200 receives the first code 404 that is selected by the user in the GUI, and then starts cross-platform translation of the first code 404, to translate the first code applicable to the source platform to obtain the code applicable to the target platform.

It should be noted that, the first code may be a code fragment formed by some code in the code file, or may be a code fragment formed by all code in the code file. This is not limited in this embodiment of this application.

S304: The code translation apparatus 100 determines the at least one translation rule that matches the first code.

The translation rule is used to directly translate code of one platform into code of another platform. The translation rule is a rule in a rule base. The rule base includes at least one translation rule. The translation rule may be specifically stored in the rule base in a form of a table.

The table (also referred to as a rule table) for storing translation rules may include a rule index and rule content. The rule index may be an identifier of the rule, for example, a rule name or a rule number. The rule name is easy for the user to remember. The rule content is used to generate the code of the target platform. Specifically, the rule content may include an instruction template of the corresponding instruction on the target platform. The instruction template includes a placeholder. The placeholder is used to occupy an instruction difference, so that modification is performed based on the placeholder during code translation.

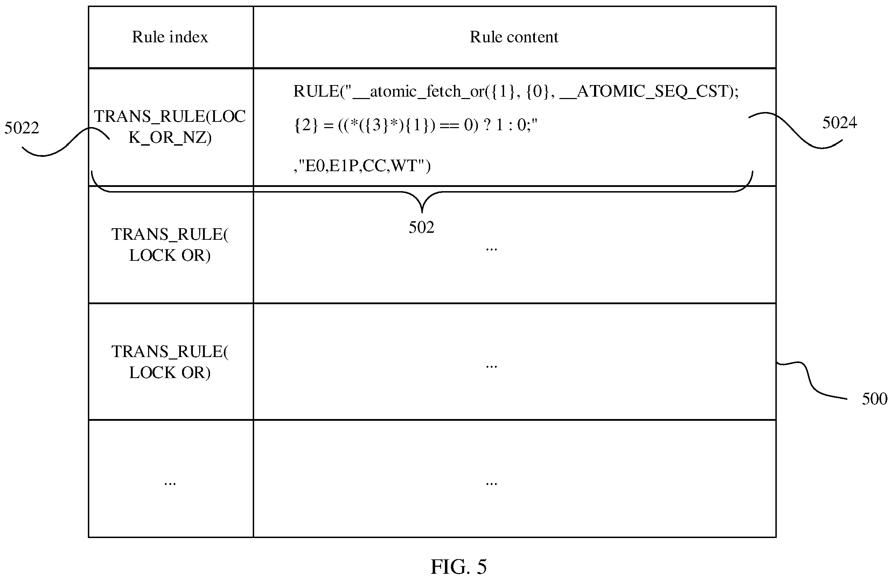

For ease of understanding, this application further provides an example of the rule table. FIG. 5 is a schematic diagram of the rule table. The rule table 500 includes several translation rules 502. Each translation rule 502 includes a rule index 5022 and rule content 5024. For example, for the instruction "Perform exclusive or on a register, and the constraint is not zero", that is, xorq+@CCNZ, the rule identifier 5022 of the translation rule 502 stored in the rule table 500 is TRANS_RULE(LOCK_OR_NZ), and the rule content 5024 is shown as follows:

```
RULE("_atomic_fetch_or({1}, {0}, _ATOMIC_SEQ_CST);
          {2} = ((*(t3}*){1}) == 0) ? 1 : 0;"
          ,"E0,E1P,CC,WT")
```

Herein, {} in the rule content 5024 is a placeholder. In the foregoing example, {0}, {1}, {2}, and {3} are placeholders. E0, E1P, CC, and WT are feature identifiers, such as feature names. A value of E0 corresponds to {0}, P in E1P represents a pointer (pointer), a value pointed to by E1P corresponds to {1}, and CC (representing a constraint) and WT (representing a width type (width type) and belonging to an instruction suffix) respectively correspond to {2} and {3}.

Because the at least one rule is usually stored in the rule base, to implement code translation, the code translation apparatus 100 may determine, from the rule base, the at least one rule that matches the first code. Specifically, the code translation apparatus 100 may extract a feature from the first code, then identify, from the feature, a feature that affects semantic meaning, and determine the at least one translation rule from the rule base based on the feature that affects semantic meaning.

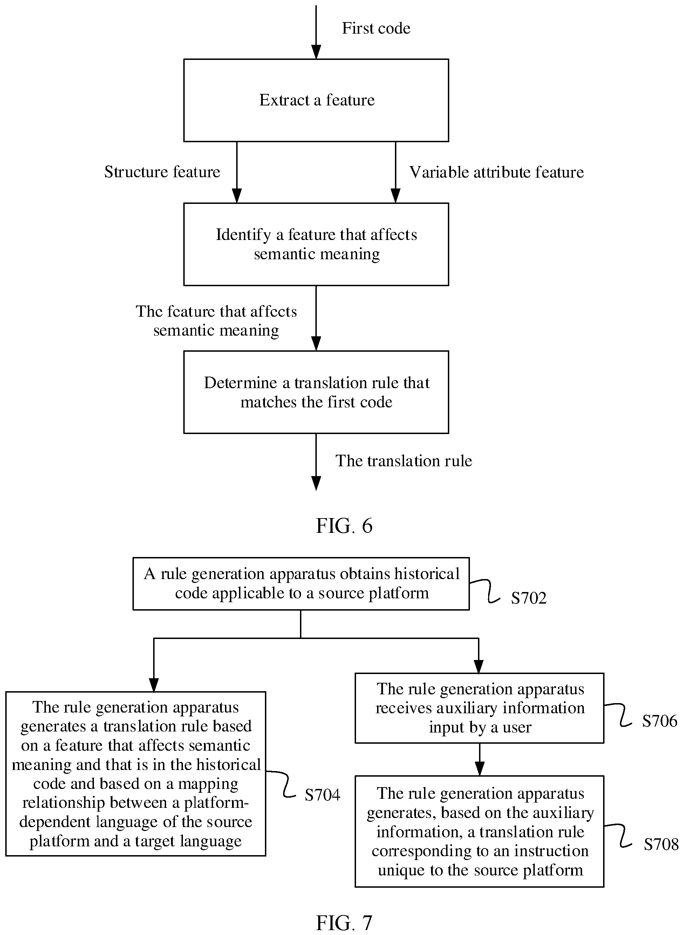

FIG. 6 is a schematic diagram of determining a translation rule. The code translation apparatus 100 may first extract the feature from the first code. Specifically, the code translation apparatus 100 may extract a structure feature of at least one statement (for example, an instruction statement). The structure feature may include any one or more of a prefix (prefix), a suffix (suffix), a constraint, and a modifier.

The prefix may be a null value or another value, for example, lock. Due to the lock prefix, a processor sets a LOCK# signal when executing the instruction. Therefore, the instruction is executed as an atomic instruction (atomic instruction). In a multi-processor environment, setting the LOCK# signal can ensure that any processor can exclusively use any shared memory.

The suffix may indicate an operand width. Based on this, the suffix may be a null value or another value, for example, b, w, l, or q. Herein, b, w, l, and q sequentially represent widths of 8, 16, 32, and 64. When the suffix is a null value, the processor may perform processing based on a default value.

The constraint is a constraint on the instruction. For example, the constraint may be that a result is not zero. The constraint may be specifically represented as CC:nz->res. Herein, nz indicates not zero, and res indicates result.

The modifier is usually used to limit a bit width of the register to be accessed. The modifier may be a null value or another value, for example, b or h. Herein, b may represent lower eight bits in the register, and h may represent higher eight bits in the register.

In some embodiments, the code translation apparatus 100 may extract a variable attribute feature from the first code. The variable attribute feature may include a variable type and a variable quantity. For example, when the variable is an operand of an instruction, the variable attribute feature may be an operand type and an operand quantity. The operand type may specifically include types such as an immediate operand (immediate, I), a register operand (register, R), and a memory operand (memory, M).

When there is one operand, a character formed by the foregoing type symbol may be used to represent the operand type and the operand quantity. For example, R indicates that the operand quantity is one and the operand type is a register operand. When there are a plurality of operands, a character string formed by the foregoing type symbols may be used to represent the operand type and the operand quantity. For example, IR indicates that there are two operands, and the operand types are an immediate operand and a register operand.

Then, the code translation apparatus 100 may identify, from the foregoing feature, the feature that affects semantic meaning. The feature that affects semantic meaning is a feature that has impact on semantic meaning. During specific implementation, the code translation apparatus 100 may identify, based on a syntax rule of the platform-dependent language, the feature that affects semantic meaning. For any one of the foregoing features, if the feature appears in a conditional statement of the syntax rule, the code translation apparatus 100 may determine that the feature is the feature that affects semantic meaning. For example, if the syntax rule includes if xx..., then..., the code translation apparatus 100 may determine that the feature xx is the feature that affects semantic meaning.

The code translation apparatus 100 may determine the at least one translation rule that matches the first code from the rule base based on the feature that affects semantic meaning. Specifically, the code translation apparatus 100 may match the feature that affects semantic meaning with the rule index in the rule base, to determine the at least one translation rule that matches the first code.

For example, if the feature that affects semantic meaning in the first code is prefix: lock, CC: nz->res, the code translation apparatus 100 may determine that the translation rule that matches the first code is a translation rule whose rule index is TRANS_RULE(LOCK_OR_NZ). For another example, if the feature that affects semantic meaning in the first code further includes prefix: lock, CC: null, the code translation apparatus 100 may determine that the translation rule that matches the first code is a translation rule whose rule index is TRANS_RULE(LOCK OR).

S306: The code translation apparatus 100 translates the first code by using the translation rule, to obtain the second code applicable to the target platform.

Specifically, the code translation apparatus 100 may fill the placeholder in the translation rule based on the feature extracted from the first code, to implement cross-platform difference processing, and obtain the second code applicable to the target platform.

When the code translation apparatus 100 determines that the translation rule that matches the first code corresponds to different languages, the second code obtained by the code translation apparatus 100 through translation may be code fragments in different languages. When the translation rule is a rule of translating the platform-dependent language of the source platform into the platform-dependent language of the target platform, the second code is a code fragment of the platform-dependent language of the target platform. When the translation rule is a rule of translating the platform-dependent language of the source platform into the high-level program language, the second code is a code fragment of the high-level program language.

For ease of understanding, the translation rule TRANS RULE(LOCK OR NZ) shown in FIG. 5 is still used as an example for description. In the foregoing rule, the features E0, E1P, CC, and WT respectively correspond to {0}, {1}, {2}, and {3}. The code translation apparatus 100 may fill, based on the foregoing correspondence, the placeholder {0} with v corresponding to E0 in the first code, and replace the placeholder {1} with a value (specifically &s) of s corresponding to E1 in the first code. Similarly, the code translation apparatus 100 replaces the placeholder {2} with res. When WT is q, it indicates that a variable width is 64 bits. Therefore, the code translation apparatus 100 replaces the placeholder {3 } with unsigned long long. The second code obtained by the code translation apparatus 100 through translation is shown as follows:

```
          _atomic_fetch_or(&s, v, _ATOMIC_SEQ_CST);
          res = ((*(unsigned long long*)&s) == 0) ? 1 : 0;
```

After translating the first code to obtain the second code, the code translation apparatus 100 may further output the second code. In some embodiments, the code translation apparatus 100 may output the second code in a form of a file. In some other embodiments, the code translation apparatus 100 may alternatively display the second code to the user in the user interface, for example, the GUI or the CUI.

Further, the code translation apparatus 100 may further prompt a difference between the source platform and the target platform. Specifically, the code translation apparatus 100 may prompt the difference between the source platform and the target platform in the GUI.

In some embodiments, when displaying the second code, the code translation apparatus 100 may highlight a difference between the second code applicable to the target platform and the first code applicable to the source platform, to prompt the difference between the source platform and the target platform.

In some other embodiments, when displaying the second code, the code translation apparatus 100 may alternatively prompt the difference between the source platform and the target platform in a form of a prompt box. The prompt box may include the difference between the source platform and the target platform, for example, may include a function call convention difference and an instruction difference.

Based on the foregoing content descriptions, an embodiment of this application provides a code translation method. In the method, automatic cross-platform translation of code is implemented by using a pre-created rule in a rule base. This resolves problems of low manual migration efficiency, a long migration period, a high migration threshold, and being prone to errors, reduces code migration costs, and can meet a service requirement. In addition, the method can directly translate the first code to the second code without using another intermediate model or object. This improves translation efficiency and translation accuracy.

In the embodiment shown in FIG. 3, automatic cross-platform translation of code is mainly implemented by using the translation rule. Therefore, before performing code translation, the code translation apparatus 100 needs to pre-obtain the translation rule. In some embodiments, the code translation apparatus 100 may receive, in the user interface, for example, the GUI, the translation rule input by a user. Further, the code translation apparatus 100 may also receive, in the user interface, for example, the GUI, a translation rule that is obtained by modifying an existing translation rule by the user.

In some possible implementations, the code translation apparatus 100 may also obtain a translation rule generated in real time. An embodiment of this application further provides a translation rule generation method. The translation rule generation method may be performed by an independent rule generation apparatus, or may be performed by a code translation apparatus 100 having a translation rule generation function.

For ease of description, in this embodiment of this application, an example in which the translation rule generation method is performed by the rule generation apparatus is used for description.

FIG. 7 is a flowchart of the translation rule generation method. The method includes the following steps.

S702: A rule generation apparatus obtains historical code applicable to a source platform.

The historical code is code written based on a platform-dependent language of the source platform. The source platform may be any one of platforms such as an x86 platform, an ARM platform, or a PowerPC platform. The platform-dependent language may be an assembly language. In some embodiments, the platform-dependent language may alternatively be a machine language.

The historical code may include at least one statement. Specifically, when the platform-dependent language is an assembly language, the historical code may include at least one instruction statement. When an instruction in the instruction statement corresponds to an instruction on a target platform, the rule generation apparatus may perform S704 to generate a corresponding translation rule. When an instruction in the instruction statement does not have a corresponding instruction on a target platform, for example, the instruction is an instruction unique to the source platform, the rule generation apparatus may perform S706 to S708 to generate a corresponding translation rule.

S704: The rule generation apparatus generates a translation rule based on a feature that affects semantic meaning and that is in the historical code and based on a mapping relationship between the platform-dependent language of the source platform and a target language.

Specifically, the rule generation apparatus may first extract a feature from historical code, for example, a structure feature of at least one statement or a variable attribute feature of at least one statement. Then, the rule generation apparatus may identify, from the foregoing extracted feature, the feature that affects semantic meaning.

The rule generation apparatus may determine, based on the feature that affects semantic meaning, a rule that can be generated, specifically, a rule index of the rule that can be generated. For example, when the feature that affects semantic meaning is prefix: lock, CC: @ccnz, the rule generation apparatus determines that the rule that can be generated includes TRANS_RULE(LOCK_OR_NZ).

The rule generation apparatus may construct rule templates corresponding to different rule indexes based on the mapping relationship between the platform-dependent language of the source platform and the target language, for example, rule templates corresponding to an or instruction and an exclusive or instruction. The rule template includes a placeholder. The placeholder specifically corresponds to a location at which a difference is generated on different platforms. For example, if expressions of operands are different on different platforms, the placeholder may be used in the rule template to replace the expressions of operands.

For ease of understanding, this application further provides an example of a rule template. The following is an example of the rule template corresponding to TRANS_RULE(OR):

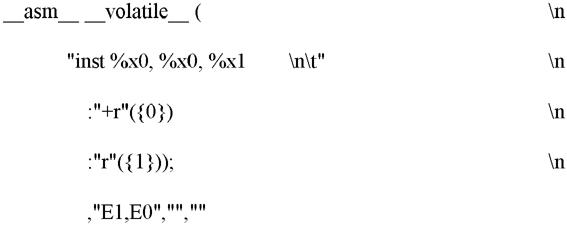

Based on this, the rule generation apparatus may replace the instruction in the rule template with an instruction that corresponds to the instruction in the instruction statement and that is on the target platform, to obtain the translation rule. Using TRANS_RULE(OR) as an example, the rule generation apparatus may replace inst in the rule template with an instruction orr, to obtain the translation rule.

S706: The rule generation apparatus receives auxiliary information input by the user.

For the instruction that does not have a corresponding instruction on the target platform, for example, the instruction unique to the source platform, the rule generation apparatus may generate the corresponding translation rule through user intervention. Specifically, the rule generation apparatus provides the GUI or a CUI, and the user may input the auxiliary information in the GUI or the CUI.

The auxiliary information may be specifically a function having same semantic meaning as the instruction of the source platform. The function may be written by the user in a high-level program language.

S708: The rule generation apparatus generates, based on the auxiliary information, the translation rule corresponding to the instruction unique to the source platform.

Specifically, the rule generation apparatus may generate, based on the function having same semantic meaning as the instruction unique to the source platform, the translation rule corresponding to the instruction unique to the source platform.

For example, a read time stamp counter (rdtsc) instruction on the x86 platform does not correspond to an instruction on the ARM platform. The user can implement the same semantic meaning by using a function in a high-level language, for example, manually writing a function rdtscOnArm(). Then, the function is submitted to the rule generation apparatus as the auxiliary information, and the rule generation apparatus generates the corresponding translation rule according to the function.

To make the technical solutions of this application clearer and easier to understand, the following describes a translation rule generation process and a code translation process in detail with reference to the specific examples.

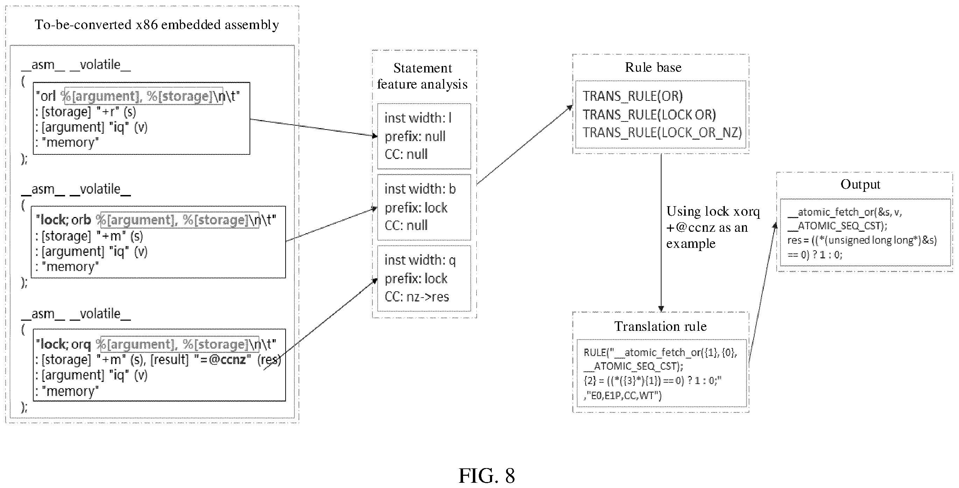

FIG. 8 is a schematic flowchart of the translation rule generation method. As shown in FIG. 8, the historical code includes a plurality of instruction statements. In this embodiment, three of the instruction statements are used as an example for description. The rule generation apparatus performs feature analysis on the foregoing three instruction statements. A first instruction statement has a structure feature of inst width: l, prefix: null, CC: null, and a variable attribute feature of IR. A second instruction statement has a structure feature of inst width: l, prefix: lock, CC: null, and a variable attribute feature of IM. A third instruction statement has a structure feature of inst width: l, prefix: lock, CC: @ccnz, and a variable attribute feature of IM.

The rule generation apparatus identifies the feature that affects semantic meaning, including a prefix and a CC. The rule generation apparatus may determine, based on the feature that affects semantic meaning, that rule indexes of rules that can be generated are TRANS_RULE(OR), TRANS_RULE(LOCK OR), and TRANS_RULE(LOCK_OR_NZ). Then, the rule generation apparatus may generate a corresponding rule based on a corresponding rule template.

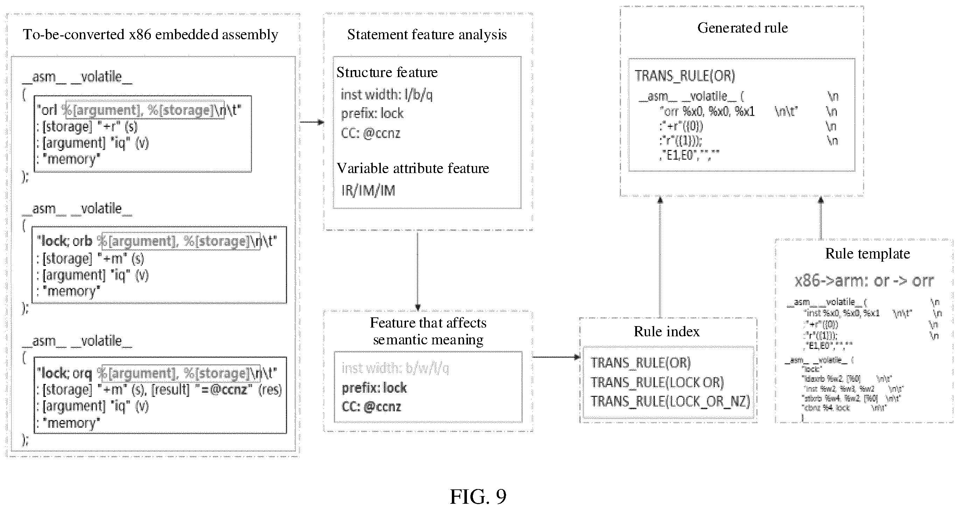

FIG. 9 is a schematic flowchart of the code translation method. As shown in FIG. 9, the first code includes three instruction statements. The code translation apparatus 100 separately performs feature analysis on the three instruction statements to obtain structure features and variable attribute features of the three instruction statements. The code translation apparatus 100 may identify, based on a syntax rule, a feature that affects semantic meaning, and determine, based on the feature that affects semantic meaning, at least one rule that matches the first code.

In this embodiment, the code translation apparatus 100 determines three translation rules: TRANS_RULE(OR), TRANS _RULE(LOCK OR), and TRANS_RULE(LOCK_OR_NZ). Then, the code translation apparatus 100 may fill a placeholder in the translation rule based on the feature extracted from the first code, to obtain the second code applicable to the target platform.

The code translation methods provided in embodiments of this application are described in detail above with reference to FIG. 1 to FIG. 9. The following describes apparatuses and devices provided in embodiments of this application with reference to the accompanying drawings.

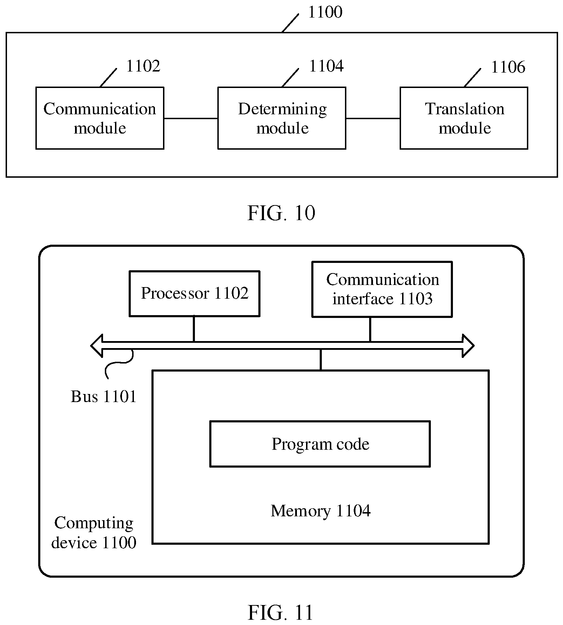

FIG. 10 is a schematic diagram of a structure of the code translation apparatus 100. The apparatus 100 includes:
a communication module 102, configured to obtain first code, where the first code is written based on a platform-dependent language of a source platform;
a determining module 104, configured to determine at least one translation rule that matches the first code, where the translation rule is used to directly translate code of one platform into code of another platform; and
a translation module 106, configured to translate the first code by using the translation rule, to obtain second code applicable to a target platform.

In some possible implementations, the communication module 102 is further configured to:
before the at least one translation rule that matches the first code is determined, receive a translation rule that is input or modified by a user in a graphical user interface.

In some possible implementations, the communication module 102 is further configured to:
before the at least one translation rule that matches the first code is determined, receive auxiliary information input by the user.

The apparatus 100 further includes:
a generation module, configured to generate, based on the auxiliary information, a translation rule corresponding to an instruction unique to the source platform.

In some possible implementations, the communication module 102 is further configured to:
before the at least one translation rule that matches the first code is determined, obtain historical code applicable to the source platform, where the historical code is written based on the platform-dependent language of the source platform.

The apparatus 100 further includes:
generating the translation rule based on a feature that affects semantic meaning and that is in the historical code and based on a mapping relationship between the platform-dependent language of the source platform and a target language.

In some possible implementations, the translation rule is stored in a rule base in a form of a table.

In some possible implementations, the determining module 104 is specifically configured to:
extract a feature from the first code;
identify, from the feature, the feature that affects semantic meaning; and
determine the at least one translation rule from the rule base based on the feature that affects semantic meaning.

In some possible implementations, the apparatus 100 further includes:
a display module, configured to display code in a code file to the user in the graphical user interface.

The communication module is specifically configured to:
receive the first code that is selected by the user in the graphical user interface.

In some possible implementations, the apparatus 100 further includes:
a prompting module, configured to prompt a difference between the source platform and the target platform.

The code translation apparatus 100 according to this embodiment of this application may correspondingly perform the methods described in embodiments of this application. The foregoing and other operations and/or functions of modules/units of the code translation apparatus 100 are separately used to implement corresponding procedures of the methods in the embodiments shown in FIG. 3 and FIG. 7. For brevity, details are not described herein again.

An embodiment of this application further provides a computing device 1100. The computing device 1100 may be an edge-side device such as a notebook computer or a desktop computer, or may be a computer cluster in a cloud environment or an edge environment. The computing device 1100 is specifically configured to implement a function of the code translation apparatus 100 in the embodiment shown in FIG. 10.

FIG. 11 is a schematic diagram of a structure of a computing device 1100. As shown in FIG. 11, the computing device 1100 includes a bus 1101, a processor 1102, a communication interface 1103, and a memory 1104. The processor 1102, the memory 1104, and the communication interface 1103 communicate with each other through the bus 1101.

The bus 1101 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The processor 1102 may be any one or more of processors such as a central processing unit (central processing unit, CPU), a graphics processing unit (graphics processing unit, GPU), a microprocessor (micro processor, MP), or a digital signal processor (digital signal processor, DSP).

The communication interface 1103 is configured to communicate with the outside. For example, first code applicable to a source platform is obtained, or second code applicable to a target platform is output.

The memory 1104 may include a volatile memory (volatile memory), for example, a random access memory (random access memory, RAM). The memory 1104 may alternatively include a non-volatile memory (non-volatile memory), for example, a read-only memory (read-only memory, ROM), a flash memory, a hard disk drive (hard disk drive, HDD), or a solid state drive (solid state drive, SSD).

The memory 1104 stores executable code. The processor 1102 executes the executable code to perform the foregoing code translation method.

Specifically, when the embodiment shown in FIG. 10 is implemented and the modules of the code translation apparatus 100 described in the embodiment of FIG. 10 are implemented by using software, software or program code required for performing functions of the modules such as the determining module 104 and the translation module 106 in FIG. 10 is stored in the memory 1104. A function of the communication module 102 is implemented by using the communication interface 1103.

Specifically, the communication interface 1103 obtains the first code, where the first code is written based on a platform-dependent language of the source platform. The communication interface 1103 transmits the first code to the processor 1102 through the bus 1101. The processor 1102 executes program code that corresponds to each module and that is stored in the memory 1104, for example, program code that corresponds to the determining module 104 and the translation module 106, to perform the steps of determining at least one translation rule that matches the first code, and translating the first code by using the translation rule, to obtain the second code applicable to the target platform. In this way, automatic cross-platform translation is performed on the first code applicable to the source platform, to obtain the second code applicable to the target platform.

Optionally, the processor 1102 may be further configured to perform method steps corresponding to other possible implementations in the embodiments shown in FIG. 3 and FIG. 7.

Couplings in embodiments of this application are indirect couplings or communication connections between apparatuses, units, or modules, may be electrical, mechanical, or another form, and are used for information exchange between the apparatuses, the units, and the modules. A specific connection medium between the communication interface 1103, the processor 1102, and the memory 1104 is not limited in this embodiment of this application. For example, the memory, the processor, and the communication interface may be connected through the bus. The bus may be classified into an address bus, a data bus, a control bus, and the like.

Based on the foregoing embodiments, an embodiment of this application further provides a computer storage medium. The storage medium stores a software program. When the software program is read and executed by one or more processors, the method performed by the edge-side device and the cloud computing device provided in any one or more of the foregoing embodiments may be implemented. The computer storage medium may include: any medium that can store program code, such as a USB flash disk, a read-only memory, a random access memory, a magnetic disk, or an optical disc.

Based on the foregoing embodiments, an embodiment of this application further provides a chip. The chip includes a processor, configured to implement functions of the edge-side device or the cloud computing device in the foregoing embodiments, for example, configured to implement the methods performed by the computing apparatus 200 and the cloud computing device in the cloud environment 300 in FIG. 1 and FIG. 2.

Optionally, the chip further includes a memory. The memory is configured to store necessary program instructions and data that are executed by the processor. The chip may include a chip, or may include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations provided that these modifications and variations in embodiments of this application fall within the scope of the claims and their equivalent technologies of this application.

## Claims

1. A code translation method, wherein the method comprises:
obtaining first code, wherein the first code is written based on a platform-dependent language of a source platform;
determining at least one translation rule that matches the first code, wherein the translation rule is used to directly translate code of one platform into code of another platform; and
translating the first code by using the translation rule, to obtain second code applicable to a target platform.

2. The method according to claim 1, wherein before the determining at least one translation rule that matches the first code, the method further comprises:
receiving a translation rule that is input or modified by a user in a graphical user interface.

3. The method according to claim 1 or 2, wherein before the determining at least one translation rule that matches the first code, the method further comprises:
receiving auxiliary information input by the user; and
generating, based on the auxiliary information, a translation rule corresponding to an instruction unique to the source platform.

4. The method according to any one of claims 1 to 3, wherein before the determining at least one translation rule that matches the first code, the method further comprises:
obtaining historical code applicable to the source platform, wherein the historical code is written based on the platform-dependent language of the source platform; and
generating the translation rule based on a feature that affects semantic meaning and that is in the historical code and based on a mapping relationship between the platform-dependent language of the source platform and a target language.

5. The method according to any one of claims 1 to 4, wherein the translation rule is stored in a rule base in a form of a table.

6. The method according to any one of claims 1 to 5, wherein the determining at least one translation rule that matches the first code comprises:
extracting a feature from the first code;
identifying, from the feature, the feature that affects semantic meaning; and
determining the at least one translation rule from the rule base based on the feature that affects semantic meaning.

7. The method according to any one of claims 1 to 6, wherein the method further comprises:
displaying code in a code file to the user in the graphical user interface; and
the obtaining first code comprises:
receiving the first code that is selected by the user in the graphical user interface.

8. The method according to any one of claims 1 to 7, wherein the method further comprises:
prompting a difference between the source platform and the target platform.

9. A code translation apparatus, wherein the apparatus comprises:
a communication module, configured to obtain first code, wherein the first code is written based on a platform-dependent language of a source platform;
a determining module, configured to determine at least one translation rule that matches the first code, wherein the translation rule is used to directly translate code of one platform into code of another platform; and
a translation module, configured to translate the first code by using the translation rule, to obtain second code applicable to a target platform.

10. The apparatus according to claim 9, wherein the communication module is further configured to:
before the at least one translation rule that matches the first code is determined, receive a translation rule that is input or modified by a user in a graphical user interface.

11. The apparatus according to claim 9 or 10, wherein the communication module is further configured to:
before the at least one translation rule that matches the first code is determined, receive auxiliary information input by the user; and
the apparatus further comprises:
a generation module, configured to generate, based on the auxiliary information, a translation rule corresponding to an instruction unique to the source platform.

12. The apparatus according to any one of claims 9 to 11, wherein the communication module is further configured to:
before the at least one translation rule that matches the first code is determined, obtain historical code applicable to the source platform, wherein the historical code is written based on the platform-dependent language of the source platform; and
the apparatus further comprises:
generating the translation rule based on a feature that affects semantic meaning and that is in the historical code and based on a mapping relationship between the platform-dependent language of the source platform and a target language.

13. The apparatus according to any one of claims 9 to 12, wherein the translation rule is stored in a rule base in a form of a table.

14. The apparatus according to any one of claims 9 to 13, wherein the determining module is specifically configured to:
extract a feature from the first code;
identify, from the feature, the feature that affects semantic meaning; and
determine the at least one translation rule from the rule base based on the feature that affects semantic meaning.

15. The apparatus according to any one of claims 9 to 14, wherein the apparatus further comprises:
a display module, configured to display code in a code file to the user in the graphical user interface; and
the communication module is specifically configured to:
receive the first code that is selected by the user in the graphical user interface.

16. The apparatus according to any one of claims 9 to 15, wherein the apparatus further comprises:
a prompting module, configured to prompt a difference between the source platform and the target platform.

17. A device, wherein the device comprises a processor and a memory; and
the processor is configured to execute instructions stored in the memory, so that the device performs the method according to any one of claims 1 to 8.
